# EUROPÄISCHE PATENTSCHRIFT

(11) **EP 0 810 082 B1**
(45) Veröffentlichungstag und Bekanntmachung des Hinweises auf die Patenterteilung: **11.12.2002**
(21) Anmeldenummer: 97890093.4
(22) Anmeldetag: 22.05.1997
(51) Int. Cl.: B29D 30/06

(54) **Verfahren und Vorrichtung zum Vulkanisieren von Reifen**
Process and apparatus for vulcanizing tyres
Procédé et appareil de vulcanisation de pneumatiques

(30) Priorität: 28.05.1996 AT 92596
(43) Veröffentlichungstag der Anmeldung: 03.12.1997
(73) Patentinhaber: Semperit Reifen Gesellschaft m.b.H-, 2514 Traiskirchen (AT)
(72) Erfinder: Haase, Ralf, Dipl.-Ing., 1230 Wien (AT)
(74) Vertreter: Vinazzer, Edith, Dipl.-Ing.

(56) Entgegenhaltungen:
- EP-A- 0 368 546
- DE-A- 2 201 080
- FR-A- 1 587 458

## Beschreibung

Die vorliegende Erfindung betrifft ein Verfahren und eine Vorrichtung zum Vulkanisieren von Reifen.

Das allgemein übliche Verfahren zum Vulkanisieren von Reifen, insbesondere von Reifenrohlingen, wird mittels eines expandierbaren Heizbalges durchgeführt, durch den, unabhängig vom verwendeten Heizpressentyp, der zu vulkanisierende Reifen bombiert und gegen die Heizform gedrückt wird.

Der Balg erfüllt eine Reihe von Funktionen, nämlich das Zentrieren des Rohlings solange die Form nicht geschlossen ist, das Trennen des Heizmediums vom Rohling, das Ausformen der Wulstzehen und der Innenlage des Reifens und die Systemabdichtung nach außen.

Es ist schon seit längerem bekannt, daß das Verfahren des Balgvulkanisierens mit einer Reihe von Nachteilen verbunden ist. Die Blähfigur des Balges weicht, insbesondere im Bereich der Reifenschulter, stark von der Rohlingskontur ab. Dadurch entstehen relativ große Luftkammern zwischen Balg und Rohling, die während der Einformung zum Verschwinden gebracht werden müssen. Aus diesem Grund werden an der Außenseite des Balges Entlüftungsrillen vorgesehen. Diese Entlüftungsrillen nehmen jedoch Innenplattenmaterial des Reifens auf und schwächen dadurch die Schichtdicke.

Der Balg legt sich ferner im Rohling zuerst im Scheitel und den Wulstbereichen an, in den Schulterbereichen des Reifens zuletzt. Dadurch erfolgt ein Lufttransport innerhalb des Rohlings entlang der Gürtelcordfäden zu den Gürtelkanten. Die dort angesammelte Luft muß von den Schulterbauteilen aufgenommen werden und schwächt die Vernetzungsfähigkeit im Walkzonenbereich. Durch den Glättungseffekt während der Ausformung der Innenlage wird an allen Bauteilstößen Reifenmaterial verfrachtet, was etwa zu Verschiebungen der Fadenteilung in der Karkasse führen kann. Dies kann zu Beulen und Einzügen in der Seitenwand des fertigen gepumpten Reifens führen.

Da im allgemeinen ein Balg für mehrere Reifendimensionen verwendet wird, können auch aus diesem Grund Entlüftungsprobleme zwischen Balg und Reifenrohling auftreten.

Die Qualität der mit Bälgen geheizten, fertigen Reifen kann dadurch beeinträchtigt sein, daß Bälge verwendet werden, die sich einseitig mehr aufblähen und somit den Reifen in der Presse dezentrieren, und ferner dadurch, daß während der Vulkanisation Balgdefekte, beispielsweise Löcher, auftreten können.

Nach Pressestillständen muß der Balg vor der Neubeschickung händisch bombiert werden, was infolge eines fehlenden automatischen Zeit/Temperatur - Verfahrens häufig zu Qualitätsproblemen bei der Inbetriebnahme führt.

Zudem bremst der Balg durch seine Wandstärke den Wärmefluß zwischen Heizmedium und Reifen, was auf Kosten der Heizzeit und der Energiebilanz geht.

Darüber hinaus erfordert der Balg eine Innenbehandlung des Rohreifens, etwa das Einsprühen mit silikonhaltiger, entweder benzinöser oder wäßriger Lösung. Diese Lösung wirkt verschweißungshemmend auf alle Reifenbauteile in der Innenseite und belastet zudem die Umwelt.

Auch die Balgherstellungs- und Balgentsorgungskosten stellen einen beachtlichen Wirtschaftsfaktor dar.

Die konstruktive Optimierung von Reifen erfolgt durch Beurteilung von Radial- und Umfangsschnitten und -schliffen des vulkanisierten Reifens. Es ist dies eine zweidimensionale Beurteilungsmethode. Konstruktive Material-Verteilungsschwächen, welche an der Reifeninnenseite durch einen in allen Richtungen gleich wirkenden Mediendruck dreidimensional zu Tage treten, werden vom Heizbalg geglättet und können nicht mehr erkannt werden. Die Folge können versteckte Schwachstellen bzw. Verschweißungsschwächen oder qualitätsschädigende Materialverschiebungen im inneren Bauteilverband des Reifens sein, die, wenn überhaupt, unter Umständen durch Blasen oder Schiebefalten erkennbar sind.

Es sind schon verschiedentlich Verfahren und Vorrichtungen zum balglosen Vulkanisieren von Reifenrohlingen vorgeschlagen worden.

Ein Verfahren und eine Vorrichtung zum Vulkanisieren von Reifen gemäß den Oberbegriffen der Ansprüche 1 und 12 sind aus der DE-A 2 201 080 bekannt. Hier ist vorgesehen, dass gegen die Reifenwülste des zu vulkanisierenden Reifens von außen zwei einander gegenüber stehende scheibenförmig ausgebildete Teile gedrückt werden. Diese Bewegung wird durch miteinander in Kontakt tretende Vorsprünge an den beiden scheibenförmigen Teilen gestoppt. Anschließend wird Druckluft in das Reifeninnere eingeleitet, um die Abdichtung der Wülste zu verstärken. Durch den Innendruck werden die beiden scheibenförmigen Teile wieder auseinander bewegt und gleichzeitig die Schließbewegung der beiden Hälften der Heizpresse begonnen. Dadurch wird der Reifen vollständig zwischen den Pressenhälften aufgenommen und die scheibenförmigen Teile in entsprechenden Ausnehmungen der Pressenhälften aufgenommen und durch die weitere Annäherung und Schließbewegung der Pressenhälften wieder angenähert.

Eine weitere Vorrichtung zum balglosen Vulkanisieren ist beispielsweise aus der DE-A 2 228 504 bekannt, bei der in der Reifenform eine Klemmeinrichtung für die Reifewülste vorgesehen wird, die eine Anpreßeinrichtung für die Reifenwülste aufweist. Mit solchen Anpresseinrichtungen soll im wesentlichen der Innenraum des Reifenrohlings abgedichtet werden. Eine Realisierung solcher Systeme scheiterte vor allem daran, daß sie viel zu aufwendig aufgebaut und somit störanfällig sind.

Die Erfindung hat sich nun die Aufgabe gestellt, ein Verfahren und eine Vorrichtung zum balglosen Vulkanisieren von Reifen, zu entwickeln, welches sowohl zum Vulkanisieren von PKW - und LKW - Reifenrohlingen in Radial - oder in Diagonalbauart, von allen Arten runderneuerter PKW - oder LKW - Reifen als auch von solchen Reifen, die in zwei voneinander getrennten Verfahrensteilen, beispielsweise gemäß dem aus der EP-A 0 729 825 bekannten Verfahren aufgebaut sind, und hier sowohl zum Vulkanisieren des im ersten Verfahrensteil aufgebauten Teilreifens, als auch zum Vulkanisieren des im zweiten Verfahrensteil komplettierten Reifens, geeignet ist. Dabei soll das Verfahren mit geringem Aufwand über die Adaption von herkömmlichen Reifenheizpressen durchführbar sein, verläßlich funktionieren und qualitativ hochwertige Fertigreifen garantieren.

Was das Verfahren betrifft, wird die gestellte Aufgabe erfindungsgemäß durch die im kennzeichnenden Teil des Anspruches 1 enthaltene Merkmalskombination gelöst.

Das erfindungsgemäße Verfahren erfordert daher vorteilhafterweise nur relativ geringe Adaptionsmaßnahmen an herkömmlichen Reifenheizpressen, und zwar unabhängig von deren Typ. Sämtliche oben erwähnten Nachteile des herkömmlichen Vulkanisierens mit Heizbälgen entfallen. Damit ist ein spürbarer Rationalisierungseffekt, beispielsweise durch das Wegfallen der Inneneinspritzung, der Balgfertigungs- und Balghändlingskosten, auch durch eine spürbare Heizzeitverkürzung, verbunden. Die nach dem erfindungsgemäßen Verfahren geheizten Reifen sind qualitativ hochwertig, da die nachteiligen Effekte des Balgheizens, wie beispielsweise der erwähnte Glättungseffekt, die Folgen von nicht optimal passenden Bälgen und defekten Bälgen, nicht mehr auftreten. Ein wesentlicher Aspekt des erfindungsgemäßen Verfahrens ist darin zu sehen, daß sich der Reifen über seine Wulstbereiche an den Wulstringen abdichtet und dies lediglich das Einleiten von Spanndampf erfordert.

Bei einer möglichen Ausführungsform der Erfindung wird der untere Wulstring vor dem Einbringen des zu vulkanisierenden Reifens in eine angehobene Position gebracht.

Dabei wird der Spanndampf mit einem Überdruck von 0,4 bis 1,8 bar, insbesondere von 0,8 bis 1,5 bar, eingeleitet.

Bei einer möglichen Ausführungsform der Erfindung läuft das Verfahren derart ab, daß beide Wulstringe in der ersten Phase des Schließens der Heizpresse unter gegenseitigem Annähern bewegt werden, wobei auch der obere Wulstring unabhängig von der Seitenschale bewegbar ist.

In diesem Fall wird die Formbetätigung vom Container selbst übernommen was auf konstruktiv einfache Weise dadurch möglich ist, daß zur Stabilisierung der oberen Formseitenschale während des Schließ- und Öffnungsvorganges in die untere Containerplatte Segmenthaken eingreifen, die an den Containersegmenten befestigt sind.

Die Steuerung des Bewegungsablaufes des Absenkens des unteren Wulstringes und ggf. des oberen Wulstringes kann auf besonders einfacher Weise über regelbare Überströmventile erfolgen.

Das erfindungsgemäße Verfahren ist dadurch besonders effektiv, daß das Schließen des Containers und der Formsegmente in an sich bekannter Weise erfolgen kann sowie auch dadurch, daß auch der Schließdruckaufbau und das Einleiten des Heizmediums in an sich bekannter Weise durchgeführt werden können.

Um thermische Schäden an Reifenbauteilen zu vermeiden, ist es dabei günstig, wenn die Temperaturführung des Heizmediums und die Temperaturbelastbarkeit der Bauteile des zu vulkanisierenden Reifens aufeinander abgestimmt werden. Dies kann über das Heizmedium selbst oder auch die Mischungszusammensetzung und entsprechende Wahl der im Reifen einzusetzenden Rohstoffe geschehen.

Auch das Entfernen des Restwassers am Ende des Heizzyklus kann auf sehr einfache Weise durchgeführt werden. Dazu wird beispielsweise am Ende des Heizzyklus in das Reifeninnere ein Dampf- oder Luftstrahl eingeleitet oder eine Beaufschlagung mit Vakuum durchgeführt. Alternativ dazu kann das Kondensat auch während des Heizprozesses durch den Innendruck kontinuierlich abgeleitet werden.

Die Erfindung betrifft femer auch eine automatisch betätigbare Heizpresse für Fahrzeugreifen gemäß dem Oberbegriff des Anspruches 12.

Bei einer erfindungsgemäß ausgeführten Heizpresse ist eine Ladevorrichtung zur Positionierung des zu vulkanisierenden Reifens auf den unteren Wulstring vorgesehen, wobei in der ersten Phase des Schließens der Presse ein Wulstringabstand einstellbar ist, bei dem die Eigensteifigkeit des zu vulkanisierenden Reifens eine Aufrückkraft auf die Wulstringe ausübt, wobei bei aufgerückten Reifenwülsten im Reifeninneren Innendruck durch Einleiten von Spanndampf erzeugbar ist und derart regelbar ist, daß der untere Wulstring durch den Innendruck in seine Endposition in der unteren Seitenschale bringbar ist.

Wie schon erwähnt liegt ein besonderer Vorteil der erfindungsgemäßen Heizpresse darin, daß diese über relativ einfache Adaptionsmaßnahmen an herkömmlichen Reifenheizpressen herstellbar ist.

Zu diesen einfachen Maßnahmen gehört, daß die Wulstringe im Zehenbereich frei von Entlüftungsbohrungen ausgeführt werden und jeweils mit einem ringförmigen Zentrierteil zum Zentrieren des Reifens ausgestattet sind

Handelt es sich um eine Heizpresse, bei der im Pressenoberteil ein auf- und abbewegbares Auswerferrohr zum Bewegen der oberen Vulkanisationsformteile, ein Rammzylinder zur Betätigung eines Kleeblattmechanismus und im Pressenunterteil ein heb- und senkbarer Brunnen vorgesehen sind, erfolgt im Pressenunterteil ein heb- und senkbarer Brunnen vorgesehen sind, efolgt im Pressenunterteil die Abdichtung des Systems auf einfache Weise derart, daß der untere Wulstring am Brunnen befestigt ist und das System nach außen mittels einer Dichtung, inbesondere einer Gummidichtung, abgedichtet ist.

Die vertikale Führung des Brunnens wird dabei auf einfache Weise dadurch bewerkstelligt, daß ein Zentrierring oder dergleichen vorgesehen ist, welcher vorzugsweise an der Heizplatte der Heizpresse befestigt ist.

Bei einer möglichen Ausführungsform einer derartigen Heizpresse ist auch vorgesehen, daß der obere Wulstring unabhängig von der Formseitenschale und gemeinsam mit dem Auswerferrohr auf- und abbewegbar ist.

Die Abdichtung zwischen Auswerferrohr und oberem Wulstring ist konstruktiv einfach dadurch möglich, wenn der obere Wulstring mit einem Manschettenzylinder fest verbunden ist, welcher einerends zum Wulstring und anderends zum Auswerferrohr, insbesondere unter Zwischenlegung einer Gummidichtung, abgedichtet ist. Auch die Abdichtung im Bereich des Rammzylinders kann sehr einfach durchgeführt werden. Dazu wird beispielsweise zwischen dem Auswerferrohr und dem Rammzylinder eine Dichtpackung angeordnet.

Bei diesem Typ von Heizpresse kann, wie schon erwähnt, auch der obere Wulstring auf- und abbewegbar sein. Ein ordnungsgemäßes Betätigen des Containers, insbesondere ein mögliches Abheben der Containersegmente von den Containerplatten durch den Innendruck des Reifen wird dadurch wirkungsvoll verhindert, wenn an den Containersegmenten Segmenthaken befestigt sind, die bei geschlossener Containerform in an der unteren Containerplatte vorgesehene Nuten eingefahren sind.

Bei einem weiteren Typ von Heizpresse, bei dem der Betätigungsmechanismus für den unteren Wulstring einen Zentralmechanismus mit einem heb- und absenkbaren unteren Balgeinspannring umfasst, welcher nach außen durch zumindest eine Dichtung, insbesondere eine Gumidichtung, abgedichtet ist, wird erfindungsgemäß anstelle des Balges zwischen dem Wulstring und dem unteren Balgklemmring eine Dichtung eingeklemmt, womit in diesem Bereich der Heizpresse die Systemabdichtung gewährleistet ist.

Die Dichtung kann dabei vorteilhafterweise auch ein abgeschnittener Balgfuß sein.

Zur Abdichtung dieses Typs Heizpresse im oberen Pressenteil ist ferner nach einem weiteren Merkmal der Erfindung vorgesehen, daß der obere Wulstring an einer deckelartig ausgeführten Wulstringplatte vorgesehen ist, mit dieser als ein Teil oder von dieser getrennt ausgeführt ist, wobei die Wulstringplatte oder der Wulstring an der Seitenschale befestigt ist und gemeinsam mit dieser bewegbar ist. Die bei diesem Typ von Heizpresse zu treffenden Maßnahmen sind daher besonders einfach.

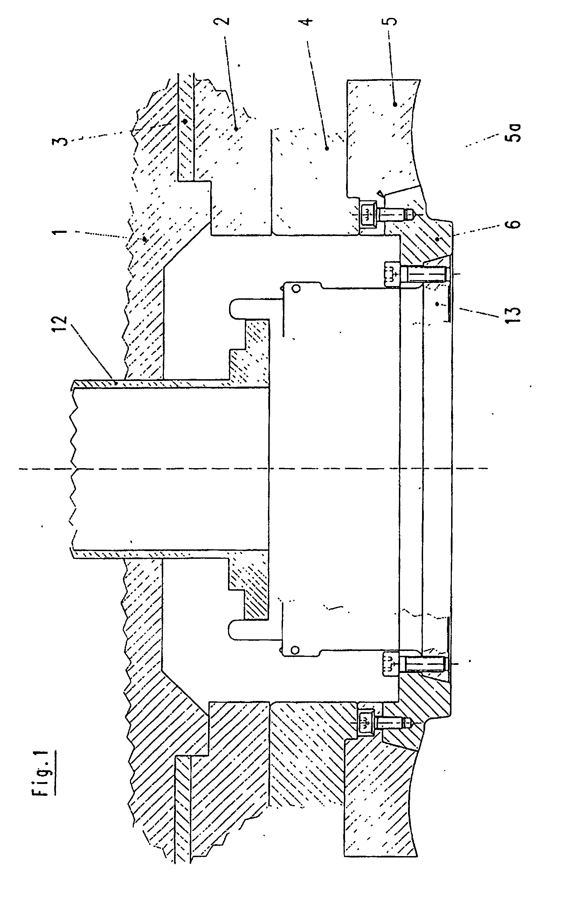

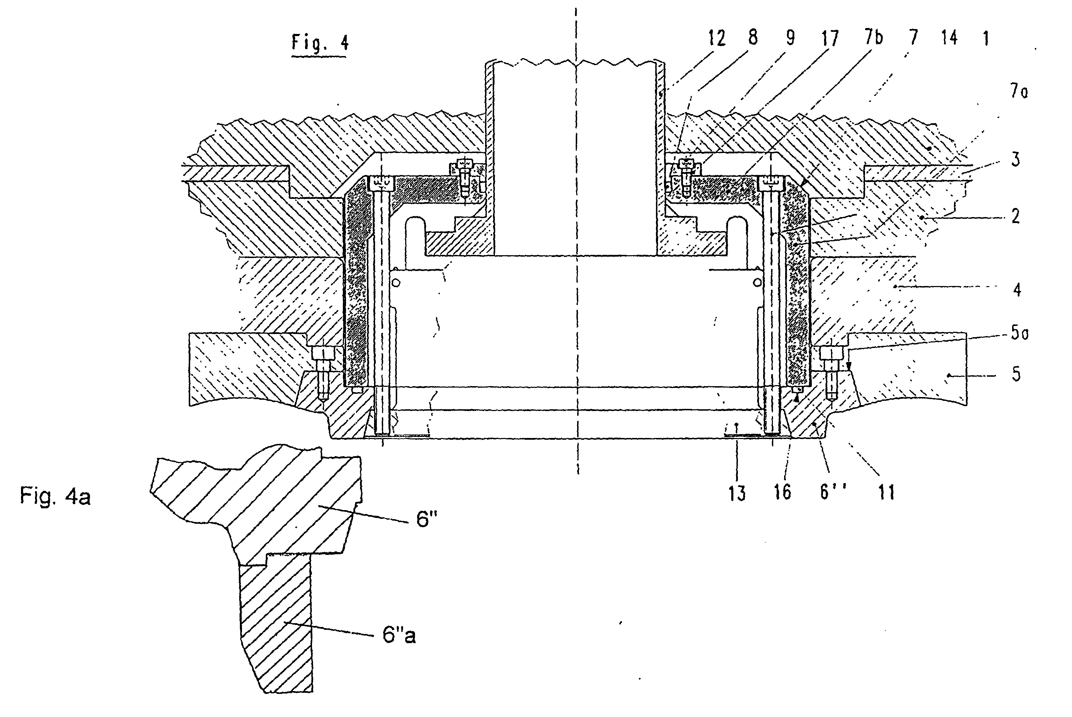

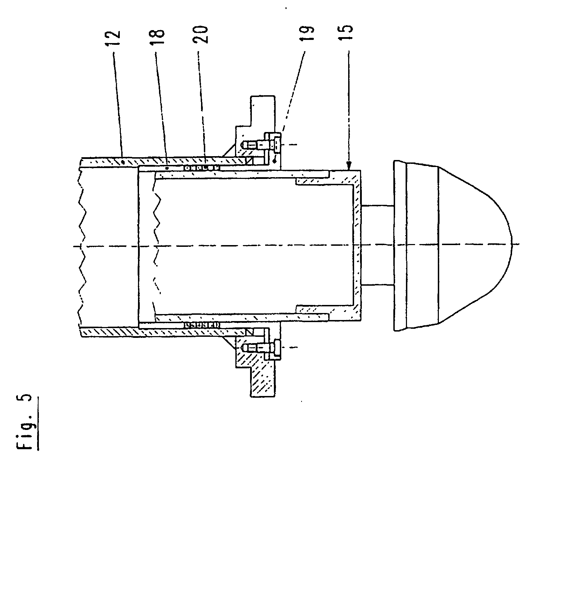

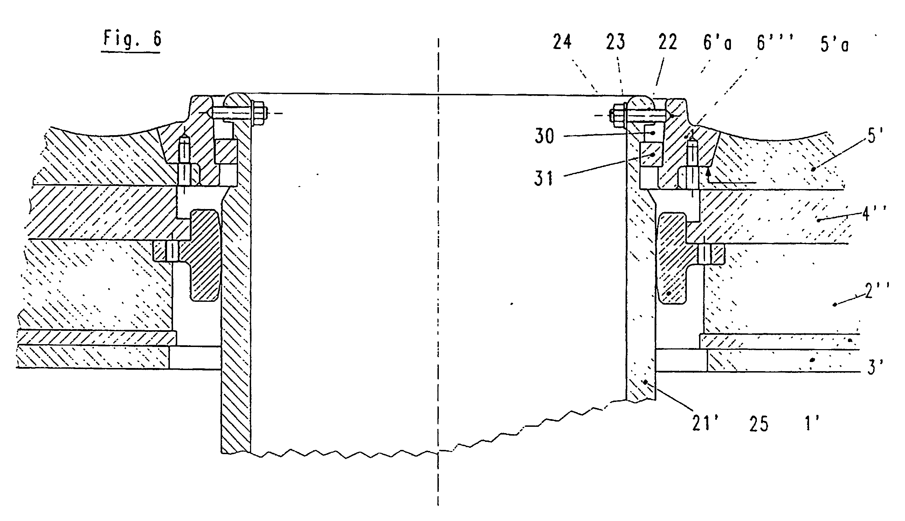

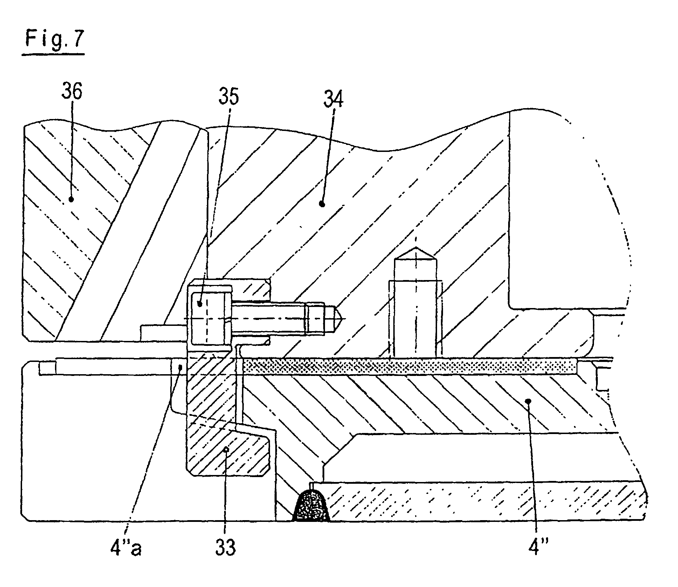

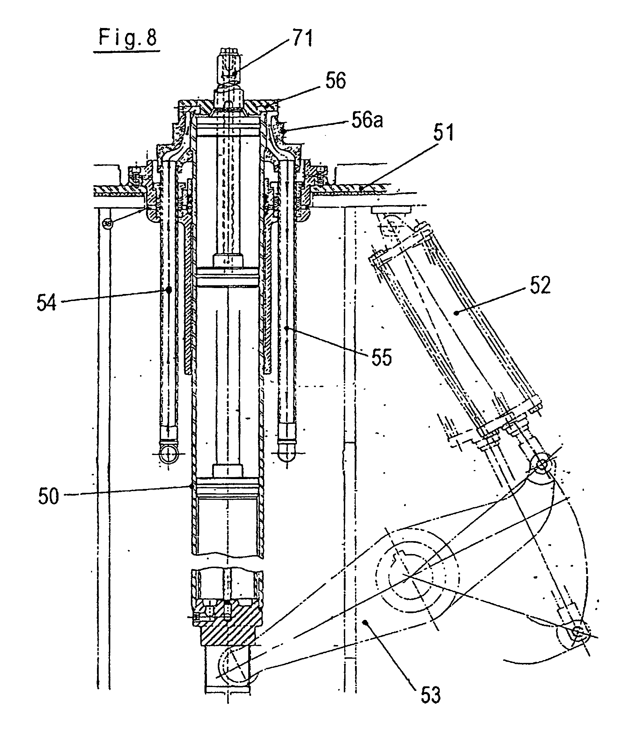

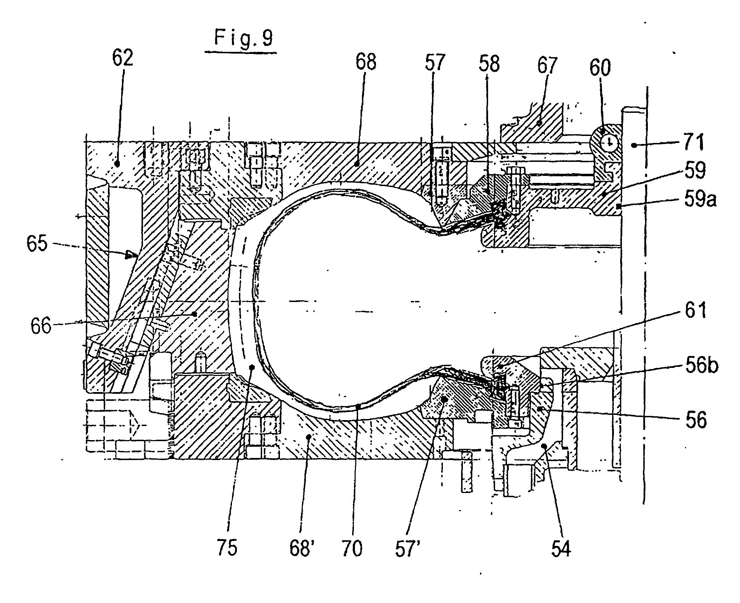

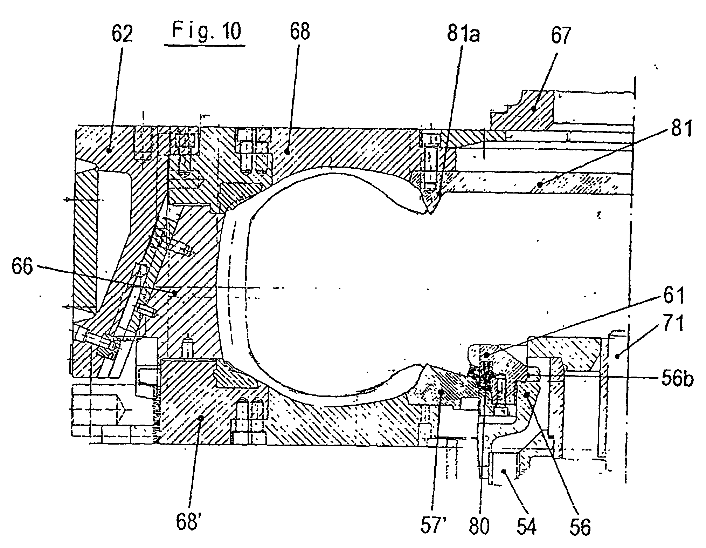

Weitere Merkmale, Vorteile und Einzelheiten der Erfindung werden nun anhand der Zeichnung, die mehrere Ausführungsbeispiele darstellt, näher beschrieben. Dabei zeigen Fig. 1 bis Fig. 3 Schnittdarstellungen durch wesentliche Bauteile einer elektrisch betriebenen Autoformpresse nach dem Stand der Technik, Fig. 4 bis Fig. 7 Schnittdarstellungen durch Teile einer ersten Ausführungsform der Erfindung ,Fig. 4 den oberen Teil der erfindungsgemäß ausgeführten Heizpresse, Fig. 4a ein Detail aus Fig. 4 in einer abgewandelten Variante, Fig. 5 eine Detailausgestaltung im Bereich des Auswerferrohres, Fig. 6 den unteren Teil der erfindungsgemäß ausgeführten Heizpresse, Fig. 7 eine Detailausgestaltung im Bereich des Containers, Fig. 8 und 9 Schnitte durch wesentliche Teile einer elektrisch betriebenen BOM-Heizpresse nach dem Stand der Technik, Fig. 8 den Zentralmechanismus, Fig. 9 die Heizbalgklemmung und die Heizform, und Fig. 10 eine Schnittdarstellung durch die erfindungsgemäß adaptierte Heizpresse in zu Fig. 9 analoger Abbildung.

Die Schnittdarstellungen der elektrisch betriebenen Autoformpresse nach dem Stand der Technik zeigen wesentliche Bauteile des Pressenoberteiles (Fig. 1), den Bereich des Rammzylinders und des Auswerferrohres (Fig. 2) und wesentliche Teile des Pressenunterteiles (Fig. 3).

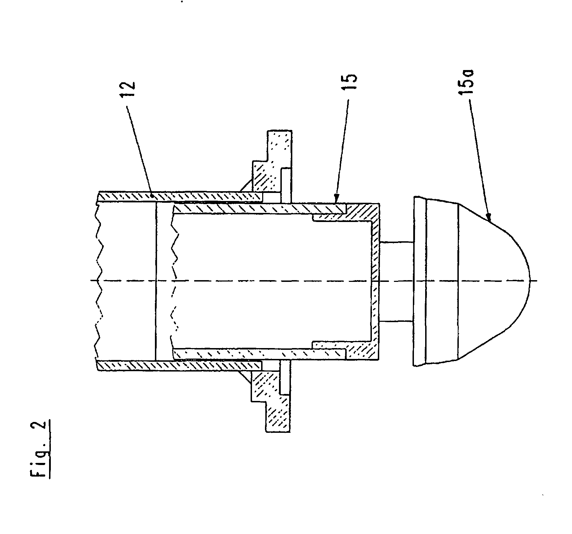

Wie aus Fig. 1 ersichtlich besitzt der Heizpressenoberteil ein Auswerferrohr 12, eine obere Aufnahmeplatte 1, eine Heizplatte 2, eine zwischen Heizplatte 2 und Aufnahmeplatte 1 befindliche Isolierplatte 3 und eine Containerplatte 4 zur Aufnahme der Seitenschale 5 der Segmentform. In einer Pfanne 5a der Seitenschale 5 befindet sich der obere Wulstring 6 der Segmentform, welcher mit der Seitenschale 5 verschraubt ist. Die weiteren Teile der Heizform, die eine für Radialreifen übliche Segmentform ist, welche mehrere, das Profil ausformende radial bewegbare Segmente aufweist, sind nicht dargestellt. Zum Entladen des Reifens aus der Presse ist ein Kleeblattmechanismus 13 vorgesehen. Wie Fig. 2 zeigt befindet sich im Auswerferrohr 12 ein gegenüber diesem vertikal bewegbarer Rammzylinder 15, welcher den Kleeblattmechanismus 13 (siehe Fig. 1) betätigt und mit seinem kugeligen Ende 15a den nicht dargestellten Heizbalg zentriert. Der Rammzylinder 15 erfüllt auch die Funktion des Balgeinstülpens.

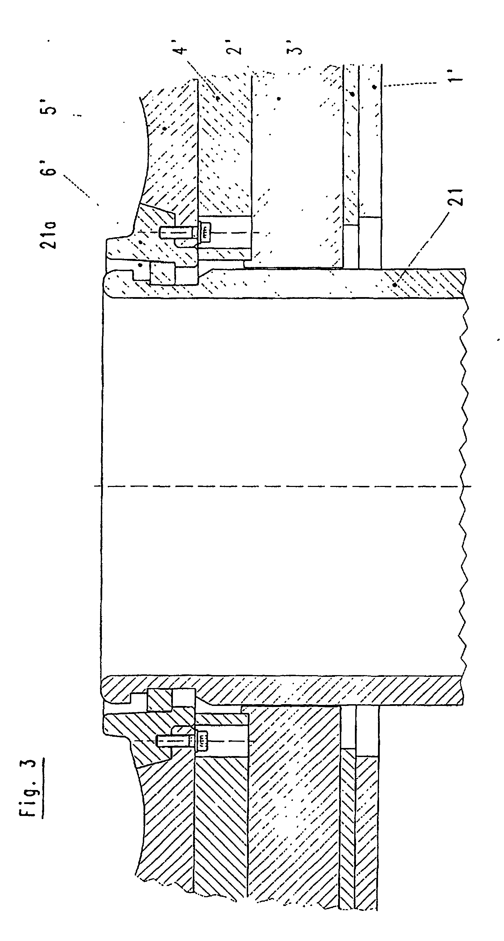

Wesentliche Teile des Pressenunterteiles sind in Fig. 3 dargestellt. Diese Teile umfassen einen Brunnen 21, welcher zylinderförmig ausgeführt und am Boden geschlossen ist und in an sich bekannter Weise mit Ein- und Ausströmöffnungen für das Heizmedium versehen ist, eine Pressentischplatte 1', die untere Heizplatte 2', eine Isolierplatte 3', die sich zwischen der Tischplatte 1' und der Heizplatte 2' befindet eine untere Containerplatte 4' sowie die zur Segmentform gehörenden Teile, wobei hier die untere Seitenschale 5' und der untere Wulstring 6' dargestellt sind. Dabei ist der Wulstring 6' mit der unteren Seitenschale 5' verschraubt. In einer Ausnehmung 21a zwischen dem Wulstring 6' und dem Brunnen 21 ist der Heizbalg (nicht dargestellt) eingespannt.

Das übliche Balg-Heizverfahren mit einer solchen Reifenpresse läuft derart ab, daß der Rohreifen bzw. der zu vulkanisierende Reifen mit einem Lader mittig und planparallel auf den unteren Wulstring 6' positioniert wird. Nach Einführen des Balges in den Rohreifen und Dampfdruckbeaufschlagung zur Erzeugung eines Haltedruckes gibt der Lader den Rohreifen frei und der Balg übernimmt die Rohreifenzentrierung. Die Presse wird bis zu einer Position, in der der obere Wulstring 6 den Rohreifenwulst leicht berührt, geschlossen. Es erfolgt nun eine Druckerhöhung im Balg (Bombierdruck), sodaß die zwischen Balg und Rohreifen befindliche Luft über die an der Balgaußenseite vorgesehenen Balgrillen in Richtung der Wulstbereiche ausgetrieben wird. Beim weiteren Schließen der Presse verkleinert sich das Balgvolumen dadurch, daß der Balg von einer Kugelform in eine reifengemäße Torusform gebracht wird. Dabei wird entweder der Druck im Balg erhöht, was die Reifenkorde belastet, oder der Spanndampf strömt über eine Blende bei etwa konstantem Druck, was unnötig Energie kostet.

Nach dem vollständigen Schließen der Presse und erfolgtem Aufbau des Schließdruckes wird des Heizmedium in den Balg eingeleitet. Bei hohem Druck erfolgt dann einerseits die Reifenausformung an der Reifenaußenseite und andererseits auch eine Glättung und Einebnung aller inneren Reifenbauteile und Verdickungen. Kleine Restluftmengen werden dabei über die Balgrillen und Entlüftungsbohrungen in den Wustringen 6, 6' abgeleitet.

Das nach der Vulkanisation und Innenentleerung im Balg befindliche Kondensat bzw. Restwasser wird durch die Balgbewegung in die Ruheposition ins Entleerungsnetz abgeleitet.

Anhand der Fig. 4 bis 7 werden nun jene Maßnahmen näher erläutert, die ein balgloses Vulkanisieren von Reifen in einer elektrisch betriebenen Autoformpresse gestatten. Dabei werden lediglich jene konstruktiven Details, die von den Darstellungen gemäß Fig. 1 bis Fig. 3 abweichen beschrieben und es sind Bauteile, die gegenüber diesen Zeichnungsfiguren nicht geändert sind mit den gleichen Bezugsziffern wie in Fig. 1 bis Fig. 3 bezeichnet. Hingegen hatten konstruktiv geänderte Bauteile und neue Bauteile neue Bezugsziffern erhalten.

Wie aus Fig. 4 ersichtlich ist, ist eine Verbindung zwischen der Seitenschale 5 und dem Wulstring 6" bei der erfindungsgemäß ausgeführten Heizpresse nicht vorgesehen. Der Wulstring 6" wird ferner ohne Entlüftungsbohrungen, die bei herkömmlichen Systemen im Wulstzehenbereich vorgesehen sind, ausgeführt.

Wie Fig. 4a zeigt, kann der Wulstring 6" mit einem auf ihm sitzenden und ringförmig umlaufenden Zentrierteil 6"a ausgestattet werden. Dabei kann der Zentrierteil 6"a als gesonderter Bauteil, welcher mit dem Wulstring 6" verschraubt wird, oder auch mit dem Wulstring 6" einteilig ausgeführt werden. Eine konische Abschrägung gestattet ein reibungsloses Aufziehen des zu vulkanisierenden Reifens. Der Zentrierteil 6"a besitzt bei Reifen, die als Rohlinge in die Presse gebracht werden, den Vorteil, daß ein etwaiges Hängenbleiben an der Wulstringzehe vermieden wird.

Ein solcher Zentrierteil wird vorteilhafterweise auch am zweiten Wulstring vorgesehen. Es wird ferner darauf verwiesen, daß bei sämtlichen Ausführungsformen der gegenständlichen erfindungsgemäßen Vorrichtung die Wulstringe mit solchen Zentrierteilen ausgestattet werden können.

Durch einen zwischen dem Auswerferrohr 12 und dem oberen Wulstring 6" angeordneten Manschettenzylinder 7 erfolgt eine Abdichtung zwischen diesen beiden Bauteilen. Der Manschettenzylinder 7 besteht aus einem zylinderförmigen Teil 7a, der innenseitig an die Seitenschale 5, die Containerplatte 4 und die Heizplatte 2 anschließt, und einem ringförmigen Teil 7b, der vom zylinderförmigen Teil 7a bis zum Auswerferrohr 12 reicht. Die Abdichtung im Bereich des Auswerferrohres 12 erfolgt durch eine O-Ringdichtung 8, die zwischen einer ringförmig umlaufenden Nase 17 des ringförmigen Teiles 7b und einem am ringförmigen Teil 7b mittels Schrauben befestigten Flansch 9 gehalten wird. Das freie, untere Ende des zylinderförmigen Teiles 7a des Manschettenzylinders 7 sitzt auf einer ringförmig umlaufenden Vertiefung 16 im Wulstring 6", in der sich ebenfalls eine O-Ringdichtung 11 befindet. Der Wulstring 6" ist mit dem Manschettenzylinder 7 und dem angedeuteten Kleeblattmechanismus 13 fest verbunden, was im dargestellten Ausführungsbeispiel über Spannschrauben 14 erfolgt. Der Wulstring 6" ist daher gemeinsam mit dem Manschettenzylinder 7, dem Kleeblattmechanismus 13 und mit dem Auswerferrohr 12 mittels des nicht dargestellten Betätigungszylinders auf und ab bewegbar.

Fig. 5 zeigt eine Möglichkeit der Abdichtung des Rammzylinders zum Auswerferrohr 12. Der gegenüber dem Auswerferrohr 12 bewegbare Rammzylinder 15 ist in bekannter Art und Weise ausgeführt, hat jedoch nur noch die Funktion der Kleeblattbetätigung zu erfüllen, bei Heizpressen nach dem Stand der Technik erfüllt er auch noch die Funktion des Balgzentrierens und des Balgeinstülpens. Zwischen dem Auswerferrohr 12 und dem Rammzylinder 15 ist eine zylindrische Hülse, insbesondere eine Bronzehülse 18, eingeschoben, eine am Auswerferrohr 12 befestigte und mit einem zylindrischen Teil ebenfalls zwischen Auswerferrohr 12 und Rammzylinder 15 ragende Stopfbüchse 19 preßt eine Dichtpackung 20 gegen die Hülse 18.

Fig. 6 zeigt die zur Erläuterung der gegenständlichen Erfindung maßgeblichen Bauteile des Heizpressenunterteiles, der wie bei einer herkömmlichen Heizpresse einen zylinderförmig ausgeführten, am Boden geschlossenen Brunnen 21', der in bekannter Weise mit Ein- und Ausströmöffnungen für das Heizmedium versehen ist, eine Pressentischplatte 1', die untere Heizplatte 2", eine Isolierplatte 3', den Containerunterteil 4" sowie die zur Segmentform gehörenden Teile, wobei hier die untere Seitenschale 5' und der untere Wulstring 6"' dargestellt sind, aufweist. Der Wulstring 6"' ist nicht, wie es bei herkömmlichen Anordnungen üblich ist, mit der unteren Seitenschale 5' verbunden, sondern ist am Brunnen 21' befestigt. Zu diesem Zweck wird der untere Wulstring 6"' beispielsweise an seinem dem Brunnen 21' zugewandten Bereich mit einer Nut 6'a versehen, in die Gewindestifte 22 eingreifen, die den Brunnen 21' durchsetzen und mittels Mutter 24 und Beilagscheibe 23 gehalten sind.

Ein an der Heizplatte 2" angeordneter Zentrierring 25 gewährleistet eine vertikale Führung des Brunnens 21'.

Die Abdichtung nach außen erfolgt über eine Ringdichtung 30, die ein abgeschnittener Balgfuß sein kann, und die unterhalb der Gewindestifte 22 in einer an der Außenseite des Brunnens 21' angeordneten Ausnehmung desselben sitzt und mittels eines Klemmringes 31 gehalten wird. Der Klemmring 31 stützt sich dabei sowohl auf einem Absatz des Wulstringes 6"' als auch einem Absatz im Brunnen 21' ab.

Der untere Wulstring 6"' ist somit gemeinsam mit dem Brunnen 21' vertikal bewegbar, wobei diese Vertikalbewegung durch den nicht dargestellten Brunnenbetätigungszylinder erfolgt.

Auch der untere Wulstring 6"' wird ohne Entlüftungsbohrungen und Entlüftungsstege im Zehenbereich ausgeführt.

Zur Durchführung des erfindungsgemäßen Heizverfahrens wird der Rohreifen mit einem geeigneten Lader auf den ausgefahrenen, (vertikal gemeinsam mit dem Brunnen 21' hochgehobenen) unteren Wulstring 6"' aufgesetzt. Dadurch wird verhindert, daß die diesem Wulstring 6"' benachbarte Rohreifenseitenwand durch die heiße Seitenschale unerwünscht thermisch belasten wird. Bei nach einem Einstufenverfahren gefertigten Rohreifen bzw. bei vulkanisierten Reifenkarkassen wäre zudem ein Zentrieren des Reifens mit abgesenktem Wulstring 6"' nicht möglich, da sich solche Reifen bzw. Reifenkarkassen nicht auf den Wulstring legen würden, da sie durch die untere Formseitenwand daran gehindert werden.

Der Schließvorgang der Heizpresse erfolgt mit gleichzeitigem Aufeinanderzubewegen bzw. Annähern der Wulstringe 6", 6"', sodaß zwangsweise ein Aufdrücken der Rohreifenwülste auf die Wulstringe 6", 6"' erfolgt. Die Schließbewegung der Heizpresse wird gestoppt, sobald sich die beiden Wulstringe 6", 6"' ausreichend angenähert haben. Die Wulstringe 6", 6"' sind dann ausreichend angenähert, wenn die Eigensteifigkeit des Rohreifens einen Wulstabstand sicherstellt, bei dem durch das nachfolgende Beaufschlagen des Reifens- und Presseninnenraumes mit heißem Dampf ein Abdichten des Reifens an den Wulstringen 6", 6"' gewährleistet ist. Bei Reifen mit geringer Eigensteigigkeit erfolgt eine Annäherung bis zum Berühren der beiden Wulstringe 6", 6"'. In dieser Phase erfolgt damit das sogenannte Spanndampffüllen, bei dem in den Innenraum der Heizpresse heißer Dampf eingeleitet wird, wobei ein Überdruck auf 0,4 bis 1,8 bar, insbesondere 0,8 bis 1,5 bar, erzeugt wird. Der Dampf spannt den Reifen, wodurch das Abdichten des Reifens an den Wulstringe 6", 6''' erfolgt. Dabei wird ab ca. 0,8 bar Überdruck der untere Wulstring 6"' durch den Innendruck in die Pfanne 5'a der Seitenschale 5' gedrückt, wobei ein Überströmventil im Hebemechanismus (Pneumatik) der Brunnenbetätigungsvorrichtung Überlastungen vermeidet. Durch einen Senkimpuls auf den Brunnenbetätigungszylinder ist gewährleistet, daß der Wulstring 6"' satt in der Pfanne 5'a der Seitenschale 5' liegt.

Anschließend wird ein Hebenimpuls für den oberen Wulstring 6" eingeleitet. Gleichzeitig erfolgt in an sich bekannter Weise das Schließen des Containers, wobei die Containersegmente gemeinsam mit den an ihnen befestigten Formsegmenten, die das Laufstreifenprofil einprägen, radial bewegt werden. Dabei berührt der Wulstring 6" die Seitenwandpfanne 5a erst dann, wenn Segmenthaken in an der unteren Containerplatte 4" vorgesehene Nuten 4'a eingefahren sind. Fig. 7 zeigt im Detail die diesbezügliche Ausgestaltung. Die Segmenthaken 33 sind an den Containersegmenten 34 mittels Schrauben 35 befestigt. Die Segmenthaken 33 verhindern das Abheben der Containersegmente 34 von den Containerplatten 4, 4" (durch den Innendruck im Reifen) und damit ein Dezentrieren des Reifens. Beim Öffnen der Presse bewegt sich der Containerschließring 36 nach oben und die Segmente 34 werden während des ersten Teiles der Radialbewegung durch die Segmenthaken 33 niedergehalten.

Vor dem Aufbau des Schließdruckes liegt der Wulstring 6" satt in der Pfanne 5a der Seitenschale 5.

Der Schließdruckaufbau folgt wie bei herkömmlichen Heizpressen auch das anschließende Einleiten des Heizmedium in den Rohreifen. Als Heizmedium kommt Dampf, Heißwasser oder inertes Gas in Frage. Das Heizmedium wird unter einen Druck von etwa 16 bis 25 bar gesetzt und übt in alle Richtungen gleichmäßig Druck auf das Innere des Reifens aus. Es erfolgen somit keine Glättung und Einebnung der inneren Reifenbauteile und es treten auch keine Verdickungen sowie auch kein ungewollter Lufttransport auf.

Durch das erfindungsgemäße balglose Vulkanisieren bietet das Innere des Fertigreifens im wesentlichen das optische Erscheinungsbild eines Rohreifens. Das äußere Erscheinungsbild des Fertigreifens entspricht bis auf den Bereich einige Millimeter vor den Wulstzehen, die mit abgerundeten Wulstzehenspitzen gebildet werden, dem eines herkömmlichen Reifens.

Das nach der Vulkanisation und Innenentleerung im Fertigreifen befindliche Kondensat bzw. Restwasser kann mit Hilfe eines Dampfstrahles, der über Düsen vom Brunnen aus beschickt in das Innere eingeleitet wird, ins Entleerungsnetz abgeführt werden. Auch ein Abführen des Kondensates durch den Innendruck während des Heizzyklus ist möglich.

Bei der Entformung wird der Reifen durch Absenken des oberen Wulstringes 6" von den Seitenschalen 5, 5' getrennt. Die Trennung aus dem Laufstreifenprofil wird, wie oben beschrieben, über die Segmenthaken 33 während des Öffnungsvorganges eingeleitet.

Bei einer alternativen Ausführungsform der Erfindung ist vorgesehen, daß nur die unteren Wulstringe 6"' getrennt von der Seitenschale 5' bewegbar sind, wobei die oberen Wulstringe 6" mit der oberen Seitenschale 5 verbunden, insbesondere verschraubt werden. Bei dieser Alternative wird daher in der ersten Phase des Schließens der obere Wulstring 6" gemeinsam mit der Seitenschale bereits in seine Endposition gedrückt und nur der untere Wulstring 6"' soweit angehoben, daß die oben beschriebene Aufrückkraft des Reifens sichergestellt ist. In diesem Fall kann die Formbetätigung über das Auswerferrohr erfolgen und auf gesonderte Segmenthaken 33 verzichtet werden, da die Betätigung des Containers auf die übliche Art und Weise durchgeführt wird.

Ein weiteres Ausführungsbeispiel wird anhand der Figuren 8 bis 10 beschrieben. Dabei zeigen die Fig. 8 und 9 Schnitte durch wesentliche Teile einer elektrisch betriebenen BOM-Heizpresse aus dem Stand der Technik im Schnitt, Fig. 8 den Zentralmechanismus und Fig. 9 die Heizbalgklemmung und die Heizform. Eine BOM-Presse besitzt einen beidseitig eingespannten Heizbalg und heb- bzw. absenkbare obere und untere Balgeinspannringe.

Wie Fig. 8 zeigt umfaßt der Zentralmechanismus einen doppelwirkenden Zylinder 50, welcher am Pressentisch 51 befestigt ist und über einen Betätigungszylinder 52 und einen Hebel 53 mitsamt den Zu- und Ableitungen 54, 55 für das Heizmedium auf und ab bewegbar ist. Der Zylinder 50 besitzt einen Zylinderdeckel 56, der mit einem Gewinde 56a versehen ist, an dem der untere Heizbalgklemmring, wie noch anhand der Fig. 9 beschrieben wird, befestigt ist. An der Kolbenstange 71 sind die oberen Balgklemmringe befestigt, was ebenfalls noch weiter unten beschrieben wird.

Fig. 9 zeigt nun die Anordnung des unteren Balgklemmringes 61 am Zylinderdeckel 56. Dabei ist der untere Heizbalgklemmring 61 mit dem Zylinderdeckel 56 verschraubt und nach außen mittels O-Ringdichtungen 56b abgedichtet. Der Heizbalg 70 ist einerends zwischen dem unteren Wulstring 57' und dem unteren Balgklemmring 61 und anderends zwischen den beiden an der Kolbenstange 71 befestigten oberen Heizbalgklemmringen 58, 59 eingeklemmt. Dabei ist der Balgklemmring 59 über eine Klemmverbindung 60 an der Kolbenstange 71 befestigt und nach außen ebenfalls mittels einer O-Ringdichtung 59a abgedichtet. Der Heizbalgklemmring 58 ist mit dem Klemmring 59 verschraubt.

In Fig. 9 sind ferner Teile der Form erkennbar, so insbesondere der Formschließring 62, der übliche Betätigungsmechanismus 65 zum Ein- und Ausfahren der Formsegmente, eines der das Profil ausformenden Formsegmente 66, die obere Seitenschale 68 sowie die untere Seitenschale 68'. Der untere Wulstring 57' ist mit der Balgeinspannung (unterer Balgklemmring 61) fest verbunden. Der obere Wulstring 57 ist mit der oberen Seitenschale 68 verschraubt. Somit sind die obere Heizbalgeinspannung (Balgklemmringe 58, 59 mitsamt Kolbenstange 71) und der obere Wulstring 57 getrennt voneinander bewegbar. Zur Rohreifenbeschickung ist die Form geöffnet, d. h. die obere Pressenteile sind weggehoben oder weggeschwenkt. Dabei ist die obere Seitenschale 68 über einen Betätigungsstempel 67 gegenüber dem am Pressenoberteil befestigten Formschließring 62 nach unten gedrückt und die Formsegmente 66 sind radial nach außen gefahren.

Durch ein Hochfahren der Kolbenstange 71 wird der Heizbalg 70 gestreckt und durch Aufbringen eines Unterdruckes gegen die Kolbenstange 71 gesaugt. Der untere Wulstring 57' ist in die untere Seitenschale 68' (Lage wie Fig. 9) abgesenkt.

Über eine entsprechende Beschickungsvorrichtung wird der Rohreifen über den gestreckten Heizbalg 70 bis auf die Höhe des unteren Wulstringes 57' abgesenkt. Über eine Dampfzuleitung 54 wird Spanndampf eingeleitet, gleichzeitig wird die obere Balgeinspannung (Balgklemmringe 58, 59 mitsamt Kolbenstange 71) abgesenkt und somit der Heizbalg in den Reifen 75 eingeführt. Nach Erreichen des Spanndampf-Haltedruckes im Balg wird der Reifen von der Beschickungsvorrichtung freigegeben und die Presse in bekannter Weise geschlossen.

Unter Bezug auf Fig. 10 werden nun die Maßnahmen bzw. die konstruktiven Änderungen gegenüber Fig. 9 erläutert, sodaß mit diesem Typ von Heizpresse ein balgloses Vulkanisieren möglich ist. Dabei sind jene Bauteile, die nicht geändert wurden, mit den gleichen Bezugsziffern wie in Fig. 9 bezeichnet, die konstruktiv geänderten Bauteile haben neue Bezugsziffern erhalten.

Zur Systemabdichtung im unteren Pressenbereich wird zwischen dem unteren Balgklemmring 61, der nun diese Funktion nicht mehr erfüllt, und dem unteren Wulstring 57 eine Dichtung 80, insbesondere eine Gummidichtung, die ein abgeschnittener Heizbalgfuß sein kann, eingeklemmt.

Zur Systemabdichtung am oberen Pressenteil ist nun eine mit dem Wulstring 81a versehene Wulstringplatte 81 vorgesehen, die an der oberen Seitenschale 68 angeschraubt wird. Die Kolbenstange 71 des Zentralmechanismus, der weiterhin wie in Fig. 8 dargestellt bleiben kann, wird nicht mehr benötigt und bleibt in ihrer unteren Position abgesenkt.

Beide Wulstringe 57', 81a sind auch bei diesem Ausführungsbeispiel im Zehenbereich frei von Entlüftungsbohrungen.

Der untere Wulstring 57' ist nach wie vor über den unteren Klemmring 61 am Deckel 56 des Zentralmechanismus (siehe Fig. 8) über ein Gewinde befestigt und durch die O-Ringe 56b nach außen abgedichtet. Der untere Wulstring 57' ist somit über den Zentralmechanismus auf und ab bewegbar.

Bei offener Presse (obere Pressenteile mit Wulstringplatte 81 sind wegbewegt bzw. hochgeschwenkt) und geöffneter Form wird der Rohreifen mittels einer geeigneten Beschickungseinrichtung, die dem Stand der Technik entsprechen kann, mit seinem unteren Wulst mittig und planparallel auf den unteren Wulstring 57', der vorher angehoben wird, aufgesetzt. Die in der oberen Seitenschale 68 eingeschraubte Wulstringplatte 81 ist durch den Betätigungsstempel 67 gegenüber den im Pressenoberteil befestigten Formschließring 62 nach unten gedrückt. Die Formsegment 66 sind radial nach außen gefahren. Die Presse wird nun soweit geschlossen, daß die Wulstringplatte 81 ihre tiefste Stelle und somit ihre Endposition erreicht. Das ist dann der Fall, wenn die Formsegmente 66 die untere Seitenschale 68' berühren.

In dieser ersten Phase des Schließens ist sicherzustellen, daß die beiden Wulstringe 81a und 57' soweit angenähert sind, daß die durch die Eigensteifigkeit des Rohreifens gegebene Aufrückkraft ausreicht, um in der nachfolgenden Schließphase die Dichtigkeit zwischen den Reifenwülsten und den Wulstringen zu gewährleisten. Die oben erwähnte Anhebeposition des unteren Wulstringes 57' ist daher entsprechend einzustellen.

Beim Erreichen dieser Pressen-Stop-Position wird über die Dampfzuleitung 54 ein auf 0,4 bis 1,8 bar, insbesondere 0,8 bis 1,5 bar, geregelter Spanndampf eingeleitet. Dieser drückt zunächst die Rohreifenwülste dampfdicht auf die beiden Wulstringe 81 a und 57' und bewegt in der Folge den unteren Wulstring 57' so weit nach unten, daß er die untere Seitenschale 68' berührt.

Um einen klaglosen Ablauf der Wulstringbewegung zu gewährleisten, wird die durch den Innendruck nach unten wirkende Senkkraft geringfügig höher gewählt als die über den Zentralmechanismus ausgeübte Hebekraft. Dies kann insbesondere durch ein im Betätigungszylinder des Zentralmechanismus eingebautes regelbares Überströmventil erfolgen.

Sobald der Wulstring 57' die Seitenschale 68' berührt wird über dem Bewegungszylinder des Zentralmechanismus der Wulstring 57' nach unten gezogen, was beim später wirkenden hohen Innendruck Austriebe zwischen dem Wulstring 57' und der unteren Seitenschale 68' vermeidet.

Während des weiteren Pressenschließvorganges werden die Formsegmente durch den Schließring radial nach innen gefahren und so die Form komplett geschlossen. Nach Schließdruckaufbau wird das Heizmedium eingeleitet. Nach Durchführung der Druckvernetzung werden das Heizmedium entleert und der Reifen entformt.

Auch bei dieser Ausführungsvariante wird das nach der Vulkanisation im Fertigreifen befindliche Kondensat bzw. Restwasser entsprechend abgeführt, was, ähnlich wie beim ersten Ausführungsbeispiel beschrieben, mit Hilfe eines Dampfstrahls, der über die Einströmöffnungen am Zylinderdeckel in das Innere geleitet wird, oder auch durch Absaugen geschehen kann.

Die gegenständliche Erfindung nützt grundsätzlich die Erkenntnis, daß sich der Reifen an den Wulstringen selbst abdichten kann. Die Steuerung der Wulstring-Pressen- und Segmentbewegung wird daher mit den Druckverläufen so abgestimmt, daß sich die Reifenwülste an den Wulstringen abdichten, keine thermische mechanische Überbeanspruchung der Reifenseitenwände und der Karkasse entstehen und die obere Formseitenwand nicht angehoben wird. Wie die Steuerung abzulaufen hat, wird für jede Reifendimension vorab festgestellt und in den automatisch ablaufenden Steuerungsvorgang eingegeben. Dies kann von jedem Fachmann auf dem Gebiet der Reifenvulkanisation durchgeführt werden. Dabei sollten auch die Temperaturführung des Heizmediums und die Temperaturbelastbarkeit der Reifenbauteile entsprechend aufeinander abgestimmt werden.

Das erfindungsgemäße Verfahren und die erfindungsgemäßen Heizpressen eignen sich nicht nur zum Vulkanisieren von Neureifen bzw. Rohreifen, sondern kann auch bei der Runderneuerung oder bei teilvulkanisierten Reifen eingesetzt werden. Mit dem erfindungsgemäßen Verfahren zum balglosen Vulkanisieren sind PKW- und LKW-Reifen, und zwar sowohl Radial- als auch Diagonalreifen, vulkanisierbar.

Erwähnt sei ferner, daß unter teilvulkanisierten Reifen insbesondere solche zu verstehen sind, die gemäß dem aus der EP-A 0 729 825 geoffenbarten Verfahren hergestellt bzw. aufgebaut werden. Bei diesem Verfahren wird eine Zweiteilung des Reifenaufbaus vorgenommen, indem zuerst ein Teilreifen, beispielsweise bis auf den Laufstreifen, aufgebaut und vulkanisiert wird. Zu einem späteren Zeitpunkt wird dieser Teilreifen zu einem kompletten Reifen, etwa durch Aufbau des rohen Laufstreifens, ergänzt und nochmals vulkanisiert. Dabei können sowohl der im ersten Verfahrensteil erstellte Teilreifen als auch der im zweiten Verfahrensteil komplettierte Reifen gemäß dem erfindungsgemäßen Verfahren und in einer erfindungsgemäßen Heizpresse vulkanisiert werden.

## Patentansprüche

1. Verfahren zum Vulkanisieren von Reifen, insbesondere auch zum Vulkanisieren von Teilreifen, in einer automatisch betätigbaren Heizpresse, welche eine schließ- und öffenbare zwei- oder mehrteilige Vulkanisationsform mit Wulstringen zur Positionierung und Formgebung der Reifenwülste und mit Seitenschalen aufweist, wobei die Wulstringe über Betätigungsmechanismen in axialer Richtung, bezogen auf die Reifenposition in der Heizpresse, bewegbar sind, wobei das System Presse-Form-Reifen innerhalb der Wulstringe durch die Heizform und/oder die Presse und außerhalb der Wulstringe durch den Reifen abdichtbar ist, in der ersten Phase des Schließens der Heizpresse die beiden Wulstringe einander angenähert werden, wobei anschließend im abgedichteten Pressen - und Reifeninnenraum, vorzugsweise in einer Stopposition des Presseschließvorganges, durch Einleiten eines Mediums ein Innendruck erzeugt wird, durch welchen die Reifenwülste dicht auf die beiden Wulstringe gedrückt werden und auf den unteren Wulstring eine Kraft ausgeübt wird, die größer ist als die über den Betätigungsmechanismus ausgeübte Hebekraft,
**dadurch gekennzeichnet,**
**daß** der zu vulkanisierende Reifen mit einer Ladevorrichtung auf den unteren Wulstring (6"', 57') gesetzt wird, wobei in der ersten Phase des Schließens die beiden Wulstringe (6", 6''', 57', 81a) ohne einander zu berühren so weit angenähert werden, bis die Eigensteifigkeit des zu vulkanisierenden Reifens eine Aufrückkraft auf die Wulstringe (6", 6"', 57', 81a) ausübt, wobei der Innendruck durch Einleiten von Spanndampf erzeugt wird, welcher derart geregelt wird, daß durch den Innendruck der untere Wulstring (6"', 57') in seine Endposition in der unteren Seitenschale (5', 68') bewegt wird.

2. Verfahren nach Anspruch 1, **dadurch gekennzeichnet, daß** der untere Wulstring (6"', 57') vor dem Einbringen des zu vulkanisierenden Reifens in eine angehobene (ausgefahrene) Position gebracht wird.

3. Verfahren nach Anspruch 1 oder 2, **dadurch gekennzeichnet, daß** der Spanndampf mit einem Überdruck von 0,4 bis 1,8 bar, insbesondere von 0,8 bis 1,5 bar eingeleitet wird.

4. Verfahren nach einem der Ansprüche 1 bis 3, **dadurch gekennzeichnet, daß** beide Wulstringe (6", 6"') in der ersten Phase des Schließens der Heizpresse unter gegenseitigem Annähern bewegt werden, wobei auch der obere Wulstring (6") unabhängig von der Seitenschale (5) bewegbar ist.

5. Verfahren nach einem der Ansprüche 1 bis 4, **dadurch gekennzeichnet, daß** zur Stabilisierung der oberen Formseitenschale (3) während des Schließ- und Öffnungsvorganges in die untere Containerplatte (4") Segmenthaken (33) eingreifen, die an den Containersegmenten (34) befestigt sind.

6. Verfahren nach einem der Ansprüche 1 bis 5, **dadurch gekennzeichnet, daß** der Bewegungsablauf des Absenkens des unteren Wulstringes (6"', 57') und ggf. des oberen Wulstringes (6") über regelbare Überströmventile erfolgt.

7. Verfahren nach einem der Ansprüche 1 bis 6, **dadurch gekennzeichnet, daß** das Schließen des Containers und der Formsegmente in an sich bekannter Weise erfolgt.

8. Verfahren nach einem der Ansprüche 1 bis 7, **dadurch gekennzeichnet, daß** der Schließdruckaufbau und das Einleiten des Heizmediums in an sich bekannter Weise erfolgen.

9. Verfahren nach einem der Ansprüche 1 bis 8, **dadurch gekennzeichnet, daß** die Temperaturführung des Heizmediums und die Temperaturbelastbarkeit der Bauteile des zu vulkanisierenden Reifen aufeinander abgestimmt werden.

10. Verfahren nach einem der Ansprüche 1 bis 9, **dadurch gekennzeichnet, daß** das nach der Vulkanisation des Reifens in dessen Innenraum befindliche Restwasser am Ende des Heizzyklus durch einen in das Reifeninnere eingeleiteten Dampf- oder Luftstrahl, durch Vakuum oder dergleichen abgeleitet wird.

11. Verfahren nach einem der Ansprüche 1 bis 9, **dadurch gekennzeichnet, daß** das Kondensat während des Heizprozesses durch den Innendruck ständig abgeleitet wird.

12. Automatisch betätigbare Heizpresse für Fahrzeugreifen, welche eine schließund öffenbare zwei- oder mehrteilige Vulkanisationsform mit Formsegmenten, Seitenschalen und mit Wulstringen zur Positionierung und Formgebung der Reifenwülste des Reifens aufweist, wobei die Wulstringe über Betätigungsmechanismen in axialer Richtung, bezogen auf die Reifenposition in der Heizpresse, bewegbar sind und die Reifenwülste durch ein Innendruck erzeugendes Medium dicht auf die beiden Wulstringe drückbar sind, wobei das System Presse-Form-Reifen innerhalb der Wulstringe durch die Heizform und/oder die Presse und außerhalb der Wulstringe durch den Reifen abgedichtet ist und wobei zumindest der untere Wulstring unabhängig von der Formseitenschale bewegbar ist,
**dadurch gekennzeichnet,**
**daß** eine Ladevorrichtung zur Positionierung des zu vulkanisierenden Reifens auf den unteren Wulstring (6", 57') vorgesehen ist, und daß in der ersten Phase des Schließens der Presse ein Wulstringabstand einstellbar ist, bei dem die Eigensteifigkeit des zu vulkanisierenden Reifens eine Aufrückkraft auf die Wulstringe (6", 6"', 57', 81a) ausübt, wobei bei aufgerückten Reifenwülsten im Reifeninneren Innendruck durch Einleiten von Spanndampf erzeugbar ist und . derart regelbar ist, daß der untere Wulstring (6"', 57') durch den Innendruck in seine Endposition in der unteren Seitenschale (5', 68') bringbar ist.

13. Heizpresse nach Anspruch 12, **dadurch gekennzeichnet, daß** die Wulstringe (6", 6"', 57', 81a) jeweils mit einem Zentrierteil (6"a) ausgestattet sind.

14. Heizpresse nach einem der Ansprüche 12 oder 13, **dadurch gekennzeichnet, daß** die Wulstringe (6", 6"', 57', 81a) im Zehenbereich frei von Entlüftungsbohrungen sind.

15. Heizpresse nach einem der Ansprüche 12 bis 14, bei der im Pressenoberteil ein auf und ab bewegbares Auswerferrohr zum Bewegen der oberen Vulkanisationsform-teile, ein Rammzylinder zur Betätigung eines Kleeblattmechanismus zum Auswerfen des fertig geheizten Reifens und im Pressenunterteil ein heb- und senkbarer Brunnen vorgesehen sind, **dadurch gekennzeichnet, daß** der untere Wulstring (6") am Brunnen (21') befestigt ist und das System nach außen mittels einer Dichtung (30), insbesondere einer Gummidichtung, abgedichtet ist.

16. Heizpresse nach Anspruch 12, **dadurch gekennzeichnet, daß** zur vertikalen Führung des Brunnens (21') ein Zentrierring (25) oder dergleichen vorgesehen ist, welcher vorzugsweise an der Heizplatte (2') der Heizpresse befestigt ist.

17. Heizpresse nach einem der Ansprüche 12 bis 16, **dadurch gekennzeichnet, daß** auch der obere Wulstring (6") unabhängig von der Formseitenschale (5) und gemeinsam mit dem Auswerferrohr (12) auf und ab bewegbar ist.

18. Heizpresse nach Anspruch 17, **dadurch gekennzeichnet, daß** der obere Wulstring (6") mit einem Manschettenzylinder (7) fest verbunden ist, welcher einerends zum Wulstring (6) und anderends zum Auswerferrohr (12), insbesondere unter Zwischenlegung einer Gummidichtung (8, 11), abgedichtet ist.

19. Heizpresse nach einem der Ansprüche 15 bis 18, **dadurch gekennzeichnet, daß** zwischen dem Auswerferrohr (12) und dem Rammzylinder (15) eine Dichtpackung (20) angeordnet ist.

20. Heizpresse nach einem der Ansprüche 17 bis 19, **dadurch gekennzeichnet, daß** an den Containersegmenten (34) Segmenthaken (33) befestigt sind, die bei geschlossener Containerform in an der unteren Containerplatte (4") vorgesehenen Nuten (4"a) eingefahren sind.

21. Heizpresse nach Anspruch 12 und 13, bei der der Betätigungsmechanismus für den unteren Wulstring einen Zentralmechanismus mit einem heb- und absenkbaren unteren Balgeinspannring umfaßt, welcher nach außen durch zumindest eine Dichtung, insbesondere eine Gummidichtung, abgedichtet ist, **dadurch gekennzeichnet, daß** anstelle des Balges zwischen dem Wulstring (57) und dem unteren Balgklemmring (61) eine Dichtung (80) eingeklemmt ist.

22. Heizpresse nach Anspruch 21, **dadurch gekennzeichnet, daß** die Dichtung (80) ein abgeschnittener Balgfuß ist.

23. Heizpresse nach Anspruch 22, **dadurch gekennzeichnet, daß** der obere Wulstring (81a) an einer deckelartig ausgeführten Wulstringplatte (81) vorgesehen ist, mit dieser als ein Teil oder von dieser getrennt ausgeführt ist, wobei die Wulstringplatte (81) oder der Wulstring an der Seitenschale (68) befestigt ist und gemeinsam mit dieser bewegbar ist.

24. Heizpresse nach einem der Ansprüche 12 bis 23, **dadurch gekennzeichnet, daß** im Betätigungsmechanismus des unteren Wulstringes bzw. im Betätigungsmechanismus des unteren Pressenteiles ein regelbares Überströmventil eingebaut ist.

## Claims

1. Method of vulcanising tyres, more especially also for vulcanising partial tyres, in an automatically actuatable heating press, which includes a closable and openable, two-compartment or multiple-compartment vulcanising mould with bead rings for positioning and shaping the tyre beads and with lateral shells, wherein the bead rings are displaceable via actuating mechanisms in the axial direction, relative to the tyre position in the heating press, wherein the press-mould-tyre system is sealable internally of the bead rings by the heating mould and/or the press and externally of the bead rings by the tyre, the two bead rings being drawn towards each other in the first phase of closing the heating press, wherein subsequently an internal pressure is generated in the sealed press and tyre interiors, preferably in a stop position of the press closing process, by the introduction of a medium, the tyre beads being pressed by said internal pressure tightly onto the two bead rings, and a force being exerted on the lower bead ring, which is greater than the lifting force exerted via the actuating mechanism, **characterised in that** the tyre to be vulcanised is placed upon the lower bead ring (6"', 57') by a loading apparatus, the two bead rings (6", 6"', 57', 81a) being drawn towards each other, without touching each other, in the first phase of closing, to such an extent until the inherent rigidity of the tyre to be vulcanised exerts an advancing force on the bead rings (6", 6"', 57', 81a), the internal pressure being generated by the introduction of top vapour, which is regulated in such a manner that the lower bead ring (6"', 57') is moved into its end position in the lower lateral shell (5', 68') by the internal pressure.

2. Method according to claim 1, **characterised in that**, prior to the introduction of the tyre to be vulcanised, the lower bead ring (6"', 57') is brought into a raised (extended) position.

3. Method according to claim 1 or 2, **characterised in that** the top vapour is introduced with an excess pressure of 0.4 to 1.8 bar, more especially 0.8 to 1.5 bar.

4. Method according to one of claims 1 to 3, **characterised in that** both bead rings (6", 6"') are moved in the first phase of closing the heating press by drawing them together, the upper bead ring (6") also being displaceable independently of the lateral shell (5).

5. Method according to one of claims 1 to 4, **characterised in that**, in order to stabilise the upper mould lateral shell (3) during the closing and opening processes, segment hooks (33) engage in the lower container plate (4"), which hooks are mounted on the container segments (34).

6. Method according to one of claims 1 to 5, **characterised in that** the displacement procedure of lowering the lower bead ring (6"', 57'), and possibly the upper bead ring (6"), is effected via controllable overflow valves.

7. Method according to one of claims 1 to 6, **characterised in that** the container and the mould segments are closed in a manner known per se.

8. Method according to one of claims 1 to 7, **characterised in that** the build-up of closing pressure and the introduction of the heating medium are effected in a manner known per se.

9. Method according to one of claims 1 to 8, **characterised in that** the temperature control of the heating medium and the temperature loadability of the component parts of the tyre to be vulcanised are adapted to each other.

10. Method according to one of claims 1 to 9, **characterised in that** the residual water, situated in the interior of the tyre after vulcanisation of said tyre, is conveyed-away at the end of the heating cycle by a jet of vapour or air, introduced into the tyre interior, by vacuum or the like.

11. Method according to one of claims 1 to 9, **characterised in that** the condensate is constantly conveyed-away by the internal pressure during the heating process.

12. Automatically actuatable heating press for vehicle tyres, which press includes a closable and openable, two-compartment or multiple-compartment vulcanising mould with mould segments, lateral shells and with bead rings for positioning and shaping the tyre beads of the tyre, wherein the bead rings are displaceable via actuating mechanisms in the axial direction, relative to the tyre position in the heating press, and the tyre beads can be pressed tightly onto the two bead rings by a medium generating internal pressure, wherein the press-mould-tyre system is sealed internally of the bead rings by the heating mould and/or the press and externally of the bead rings by the tyre, and wherein at least the lower bead ring is displaceable independently of the mould lateral shell, **characterised in that** a loading apparatus for positioning the tyre to be vulcanised is provided on the lower bead ring (6", 57'), and **in that** a bead ring spacing can be set in the first phase of closing the press, whereby the inherent rigidity of the tyre to be vulcanised exerts an advancing force on the bead rings (6", 6"', 57', 81a), wherein internal pressure can be generated by introducing top vapour when the tyre beads in the tyre interior are advanced and is controllable in such a manner that the lower bead ring (6"', 57') can be brought into its end position in the lower lateral shell (5', 68') by the internal pressure.

13. Heating press according to claim 12, **characterised in that** the bead rings (6", 6"', 57', 81a) are each provided with a centering part (6"a).

14. Heating press according to one of claims 12 or 13, **characterised in that** the bead rings (6", 6''', 57', 81a) are free of ventilation bores in the toe region.

15. Heating press according to one of claims 12 to 14, wherein a reciprocatable ejector pipe for moving the upper vulcanising mould parts and a ram cylinder for actuating a clover-leaf mechanism for ejecting the fully heated tyre are provided in the upper part of the press, and a raisable and lowerable shaft is provided in the lower part of the press, **characterised in that** the lower bead ring (6") is mounted on the shaft (21'), and the system is sealed outwardly by means of a seal (30), more especially a rubber seal.

16. Heating press according to claim 12, **characterised in that**, for the vertical guidance of the shaft (21'), a centering ring (25) or the like is provided which is mounted preferably on the heating plate (2') of the heating press.

17. Heating press according to one of claims 12 to 16, **characterised in that** the upper bead ring (6") is also reciprocatable independently of the mould lateral shell (5) and jointly with the ejector pipe (12).

18. Heating press according to claim 17, **characterised in that** the upper bead ring (6") is securedly connected to a sleeve cylinder (7) which is sealed, at one end, from the bead ring (6) and, at the other end, from the ejector pipe (12), more especially by the interposition of a rubber seal (8, 11).

19. Heating press according to one of claims 15 to 18, **characterised in that** a packing (20) is disposed between the ejector pipe (12) and the ram cylinder (15).

20. Heating press according to one of claims 17 to 19, **characterised in that** segment hooks (33) are mounted on the container segments (34), which hooks are driven into grooves (4"a), which are provided on the lower container plate (4"), when the container mould is closed.

21. Heating press according to claims 12 and 13, wherein the actuating mechanism for the lower bead ring includes a central mechanism having a raisable and lowerable, lower bellows clamping ring, which is sealed outwardly by at least one seal, more especially a rubber seal, **characterised in that**, instead of the bellows, a seal (80) is clamped in position between the bead ring (57) and the lower bellows claiming ring (61).

22. Heating press according to claim 21, **characterised in that** the seal (80) is a truncated bellows foot.

23. Heating press according to claim 22, **characterised in that** the upper bead ring (81a) is provided on a bead ring plate (81), which has a cover-like configuration, and is configured as one part with said plate or is separate therefrom, the bead ring plate (81) or the bead ring being mounted on the lateral shell (68) and being displaceable jointly with said shell.

24. Heating process according to one of claims 12 to 23, **characterised in that** a controllable overflow valve is incorporated in the actuating mechanism of the lower bead ring or respectively in the actuating mechanism of the lower part of the press.

## Revendications

1. Procédé pour la vulcanisation de pneumatiques, notamment également pour la vulcanisation de pneumatiques partiels, dans une presse chauffante pouvant être actionnée automatiquement, qui comporte un moule de vulcanisation, qui peut être fermée et ouverte, comporte deux ou plusieurs éléments et comporte des anneaux pour talons pour le positionnement et la conformation des talons du pneumatique, et des coques latérales, les anneaux pour talons pouvant être déplacés au moyen de mécanismes d'actionnement dans une direction axiale, rapportée à la position du pneumatique dans la presse chauffante, selon lequel le système presse-moule-pneumatique peut être fermé de façon étanche à l'intérieur des anneaux pour talons par le moule chauffant et/ou la presse, et à l'extérieur des anneaux pour talons par le pneumatique, et dans la première phase de la fermeture de la presse chauffante, les deux anneaux pour talons sont rapprochés l'un de l'autre, et selon lequel ensuite une pression intérieure est produite dans l'espace intérieur de la presse et du pneumatique, fermé de façon étanche, de préférence dans une position d'arrêt du processus de fermeture de la presse, par injection d'un milieu, cette pression intérieure repoussant les talons du pneumatique d'une manière étanche sur les deux anneaux pour talons tandis qu'à l'anneau inférieur pour talon est appliquée une force qui est supérieure à la force de soulèvement appliquée au moyen du mécanisme d'actionnement, **caractérisé en ce qu'**on place le pneumatique à vulcaniser au moyen d'un dispositif de charge sur l'anneau inférieur (6"', 57') pour talon, auquel cas pendant la première phase de la fermeture, les deux anneaux (6", 6"', 57', 81a) pour talons se rapprochent l'un de l'autre sans se toucher au point que la rigidité propre du pneumatique à vulcaniser applique une force de rappel aux anneaux (6", 6"', 57', 81a) pour talons, la pression intérieure étant produite par l'injection d'une vapeur de serrage qui est réglée de telle sorte que sous l'effet de la pression intérieure, l'anneau intérieur (6"', 57') pour talon est amené dans sa position finale dans la coque latérale inférieure (5', 68').

2. Procédé selon la revendication 1, **caractérisé en ce que** l'anneau inférieur (6"', 57') pour talon est amené dans une position soulevée (déployée) avant l'introduction du pneumatique à vulcaniser.

3. Procédé selon la revendication 1 ou 2, **caractérisé en ce que** la vapeur de serrage est introduite avec une surpression comprise entre 0,4 et 1,8 bar, et notamment comprise entre 0,8 et 1,5 bar.

4. Procédé selon l'une des revendications 1 à 3, **caractérisé en ce que** pendant la première phase de fermeture de la presse chauffante les deux anneaux (6", 6"') pour talons sont déplacés en étant rapprochés l'un de l'autre, l'anneau supérieur (6") pour talon étant également déplaçable indépendamment de la coque latérale (5).

5. Procédé selon l'une des revendications 1 à 4, **caractérisé en ce que** pour la stabilisation de la coque latérale supérieure (3) du moule pendant le processus de fermeture et d'ouverture, des crochets (33), qui sont fixés aux segments (34) du conteneur, s'engagent dans la plaque inférieure (4") du conteneur.

6. Procédé selon l'une des revendications 1 à 5, **caractérisé en ce que** le déplacement d'abaissement de l'anneau inférieur (6"', 57') pour talon et éventuellement de l'anneau supérieur (6") pour talon s'effectue au moyen de soupapes de décharge réglables.

7. Procédé selon l'une des revendications 1 à 6, **caractérisé en ce que** la fermeture du conteneur et des segments du moule s'effectue de façon connue en soi.

8. Procédé selon l'une des revendications 1 à 7, **caractérisé en ce que** l'établissement de la pression de fermeture et l'introduction du milieu chauffant s'effectuent de façon connue en soi.

9. Procédé selon l'une des revendications 1 à 8, **caractérisé en ce que** le pilotage de la température du milieu chauffant et la capacité de charge thermique des composants du pneumatique à vulcaniser sont accordés entre eux.

10. Procédé selon l'une des revendications 1 à 9, **caractérisé en ce que** l'eau résiduelle, qui est située dans l'espace intérieur du pneumatique après la vulcanisation de ce dernier, est évacuée à la fin du cycle de chauffage, au moyen d'un jet de vapeur ou d'air introduit à l'intérieur du pneumatique, par dépression ou analogue.

11. Procédé selon l'une des revendications 1 à 9, **caractérisé en ce que** le condensat est évacué en permanence sous l'effet de la pression intérieure, pendant le processus de chauffage.

12. Presse chauffante pouvant être actionnée automatiquement pour pneumatiques de véhicule, qui comporte un moule de vulcanisation pouvant être fermé et ouvert, est formé de deux ou de plusieurs éléments et comporte des segments, des coques latérales et des anneaux pour talons pour le positionnement et le formage des talons du pneumatique, et dans laquelle les anneaux pour les talons peuvent être déplacés dans une direction axiale, par rapport à la position du pneumatique dans la presse chauffante, et les talons du pneumatique peuvent être repoussés directement contre les deux anneaux pour les talons, au moyen d'un milieu produisant une pression intérieure, le système presse-moule-pneumatique étant fermé de façon étanche à l'intérieur des anneaux pour les talons par le moule chauffant et/ou la presse, et à l'extérieur des anneaux pour les talons par le pneumatique, tandis qu'au moins l'anneau inférieur pour les talons peut être déplacé indépendamment de la coque latérale du moule, **caractérisée en ce qu'**il est prévu un dispositif de chargement pour positionner le pneumatique à vulcaniser sur l'anneau inférieur (6", 57') pour talon, et que dans la première phase de fermeture de la presse, on peut régler une distance entre les anneaux pour les talons, pour laquelle la rigidité propre du pneumatique à vulcaniser exerce une force de rappel sur les anneaux (6", 6"', 57', 81a) pour les talons, auquel cas, lorsque les anneaux pour les talons sont rétractés, une pression intérieure peut être produite à l'intérieur du pneumatique par introduction d'une vapeur de serrage et est réglable de telle sorte que l'anneau inférieur (6"', 57') pour talon peut être amené, au moyen de la pression intérieure, dans sa position finale dans la coque latérale inférieure (5', 68').

13. Presse chauffante selon la revendication 12, **caractérisée en ce que** les anneaux (6", 6"', 57', 81a) pour les talons sont équipés respectivement d'une partie de centrage (6"a).

14. Presse chauffante selon la revendication 12 ou 13, **caractérisée en ce que** les anneaux (6", 6"', 57', 81a) pour les talons sont exempts de perçages d'aération dans la zone de la pointe.

15. Presse chauffante selon l'une des revendications 12 à 14, dans laquelle il est prévu, dans la partie supérieure de la presse, un tube d'éjection déplaçable vers le haut et vers le bas et servant à déplacer les pièces des parties supérieures du moule de vulcanisation, un vérin pour actionner un mécanisme en forme de feuille de trèfle pour éjecter le pneumatique chauffé à l'état terminé, et, dans la partie inférieure de la presse il est prévu un réservoir pouvant être soulevé et abaissé, **caractérisée en ce que** l'anneau inférieur (6") pour talon est fixé au réservoir (21') et que le système est étanchéifié vis-à-vis de l'extérieur à l'aide d'une garniture d'étanchéité (30), notamment une garniture d'étanchéité en caoutchouc.

16. Presse chauffante selon la revendication 1, **caractérisée en ce que** pour le guidage vertical du réservoir (21'), il est prévu une bague de centrage (125) ou analogue, qui est fixée de préférence à la plaque chauffante (2') de la presse chauffante.

17. Presse chauffante selon l'une des revendications 12 à 16, **caractérisée en ce que** l'anneau supérieur (6") pour talon peut être également soulevé et abaissé indépendamment de la coque latérale (5) du moule et conjointement avec le tube d'éjection (12).

18. Presse chauffante selon la revendication 17, **caractérisée en ce que** l'anneau supérieur (6") pour talon est relié de façon fixe à un cylindre à manchon (7), qui est fermé de façon étanche à une extrémité par rapport à l'anneau (6) pour talon et à une autre extrémité par rapport au tube d'éjection (12), notamment moyennant le montage intercalé d'une garniture d'étanchéité en caoutchouc (8, 11).

19. Presse chauffante selon l'une des revendications 15 à 18, **caractérisée en ce qu'**une garniture d'étanchéité (20) est disposée entre le tube d'éjection (12) et le vérin (15).

20. Presse chauffante selon l'une des revendications 17 à 19, **caractérisée en ce que** sur les segments (34) du conteneur sont fixés des crochets (33) qui, lorsque le moule du conteneur est fermé, s'engagent dans des rainures (4"a) prévues sur la plaque inférieure (4") du conteneur.

21. Presse chauffante selon les revendications 12 et 13, dans laquelle le mécanisme d'actionnement pour l'anneau inférieur pour talon comprend un mécanisme central comportant une bague de serrage inférieure à soufflet pouvant être soulevée et abaissée et qui est fermée de façon étanche vis-à-vis de l'extérieur par au moins une bague d'étanchéité, notamment une bague d'étanchéité en caoutchouc, **caractérisée en ce qu'**à la place du soufflet, une garniture d'étanchéité (80) est serrée entre l'anneau (57) pour talon et la bague inférieure de serrage à soufflet (61).

22. Presse chauffante selon la revendication 21, **caractérisée en ce que** la garniture d'étanchéité (80) est une base sectionnée de soufflet.

23. Presse chauffante selon la revendication 22, **caractérisée en ce que** l'anneau supérieur (80a) pour talon est prévu sur une plaque réalisée en forme de couvercle (81) à anneau pour talon, est agencé d'un seul tenant avec cette dernière ou en en étant séparé, la plaque (81) de l'anneau pour talon ou l'anneau pour talon étant fixé sur la coque latérale (68) et étant déplaçable conjointement avec cette dernière.

24. Presse chauffante selon l'une des revendications 12 à 23, **caractérisée en ce qu'**une soupape de décharge réglable est incorporée dans le mécanisme d'actionnement de l'anneau inférieur pour talon ou dans le mécanisme d'actionnement de la partie inférieure de la presse.
